# FASCICULE DE BREVET EUROPEEN

(11) **EP 2 800 649 B1**
(45) Date de publication et mention de la délivrance du brevet: **06.03.2019**
(21) Numéro de dépôt: 13701821.4
(22) Date de dépôt: 03.01.2013
(51) Int. Cl.: B23G 5/00, B23B 35/00, B23B 51/02, B23G 1/38

(54) **OUTIL POUR L'USINAGE D'UNE PAROI D'UNE PIÈCE, NOTAMMENT EN MATÉRIAU COMPOSITE**
WERKZEUG ZUR BEARBEITUNG EINER WAND EINES WERKSTÜCK, INSBESONDERE AUS VERBUNDMATERIAL
TOOL FOR MACHINING A WALL OF A WORKPIECE, PARTICULARLY OF COMPOSITE MATERIAL

(30) Priorité: 05.01.2012 FR 1250136
(43) Date de publication de la demande: 12.11.2014
(73) Titulaire: Safran Aircraft Engines, 75015 Paris (FR)
(72) Inventeur: GROSBOIS, Christophe, F-77380 Combs la Ville (FR); SEVE, Mathias, F-75012 Paris (FR)
(74) Mandataire: Gevers & Orès
(86) Numéro de dépôt international: PCT/FR2013/050012
(87) Numéro de publication internationale: WO 2013/102736

(56) Documents cités:
- WO-A1-92/04997
- DE-A1-102005 042 409
- JP-A- 10 043 943

## Description

La présente invention se rapporte à l'usinage des pièces en matériau composite.

Bien qu'elle soit particulièrement adaptée à l'usinage de pièces en matériau composite (et notamment à matrice organique, encore désigné matériau CMO), la présente invention n'est toutefois pas limitée à cette application et pourrait tout aussi bien être mise en oeuvre pour l'usinage de pièces en matériau métallique, plastique, etc.

On sait que les turbomoteurs d'aéronefs modernes comprennent de plus en plus de pièces en matériaux CMO (par exemple les carters de rétention des compresseurs, le carter de soufflante, etc.), choisis pour leurs qualités de résistance et de légèreté. En effet, les matériaux CMO permettent d'obtenir des pièces de géométrie complexe avec des surfaces et des dimensions réduites.

De façon connue, les matériaux CMO sont formés à l'aide de préformes fibreuses à structure bidimensionnelle ou tridimensionnelle et d'une résine époxy. Les préformes fibreuses, une fois réalisées, sont introduites dans un moule dans lequel de la résine est injectée. Le chauffage du moule dans une étuve permet ensuite la polymérisation de la résine et la formation des matériaux CMO.

Cependant, qu'ils soient à structure bidimensionnelle ou tridimensionnelle, les matériaux CMO restent difficiles à usiner et sont sensibles au délaminage et à l'arrachement des fibres. Ainsi, certaines opérations d'usinage (par exemple le perçage et le taraudage) sont déconseillées, voire même à proscrire, lorsqu'elles interrompent la continuité des fibres et risquent d'affaiblir la tenue mécanique des pièces.

Or, dans le cas d'un carter de compresseur d'un turbomoteur, plusieurs accessoires doivent être montés sur le fût dudit carter. Le maintien des accessoires nécessite l'implantation de platines de fixation qui sont, pour un carter métallique, maintenues sur le fût soit par perçage et rivetage, soit par taraudage et vissage.

Le perçage et le taraudage étant peu recommandés, les industriels concepteurs de turbomoteurs ont donc dû développer des solutions soit pour contourner l'incapacité des matériaux CMO à supporter de telles opérations d'usinage, soit pour pallier l'affaiblissement de la structure d'une pièce en matériau CMO après usinage.

Ainsi, une solution connue consiste à noyer des inserts métalliques lors de la formation de la préforme fibreuse. Les inserts sont alors prisonniers des fibres du matériau CMO polymérisé et aucune opération d'usinage déconseillée n'est alors nécessaire.

Toutefois, une telle solution n'est envisageable que pour des pièces en matériau CMO à structure bidimensionnelle. Elle est, en effet, très difficilement applicable pour des pièces de grandes tailles tissées en trois dimensions et à géométrie complexe. L'intégration d'inserts métalliques lors du tissage des fibres est rendu difficile, voire impossible, en raison de la taille et du volume des pièces, ainsi que de l'important foisonnement des fibres de la préforme.

Aussi, pour pallier cet inconvénient et pour permettre l'usinage des pièces (notamment le perçage et le taraudage), il est connu de renforcer la pièce en matériau CMO, par une augmentation de matière, au voisinage des trous à percer. Les efforts s'exerçant autour des trous percés - éventuellement taraudés - sont ainsi répartis, ce qui réduit le risque de rupture de la pièce une fois les platines de fixation rivetées ou vissées.

Cependant, un tel renforcement par ajout de matière provoque une augmentation de masse non négligeable, ce qui ne peut être satisfaisant dans une optique de réduction de la masse d'un turbomoteur.

Par ailleurs, pour réaliser le taraudage des trous percés dans une pièce en matériau CMO, on utilise actuellement des tarauds (par exemple en acier HSS (pour en anglais « High Speed Steel »), ou bien encore en carbure) qui comportent des dents de coupe.

Toutefois, outre une usure extrêmement rapide, les dents de coupe de tels tarauds engendrent des efforts de coupe significatifs sur les matériaux CMO, ce qui entraîne notamment :
- une déformation de la pièce en matériau CMO ;
- un échauffement de la résine du matériau CMO ;
- des délaminages du matériau CMO dans un voisinage du trou ; et
- des éclatements de fibres du matériau CMO.

De tels défauts d'usinage, amplifiés avec la finesse du pas du taraudage, affectent l'intégrité du matériau CMO formant la pièce à usiner. Il est donc impossible de garantir la santé matière de celle-ci.

Autrement dit, le taraudage d'un trou dans une pièce en matériau CMO, en utilisant des tarauds à dents de coupe, provoque un affaiblissement préjudiciable de sa structure mécanique et donc de sa résistance aux efforts en utilisation, une fois montée.

On connait par ailleurs des outils d'usinage comportant des nervures annulaires saillantes dont la surface externe est recouverte de grains abrasifs et dont la hauteur radiale est évolutive pour faciliter le creusement des sillons. Ils permettent de procéder de façon progressive pour le creusement des sillons, les nervures de plus faible hauteur assurant une ébauche dans le taraudage. Néanmoins ces outils, décrits dans le brevet japonais JP 10043943, qui présente les caractéristiques techniques du préambule de la revendication 1, ne peuvent enlever que de faibles volumes de copeaux lors de leur passage dans le trou à tarauder et il est nécessaire d'effectuer plusieurs passes pour creuser la forme des filets.

La présente invention a pour objet de remédier à ces inconvénients et, notamment, de permettre le taraudage en une seule passe, ou défaut en un nombre restreint de passes, de trous percés dans une pièce en matériau composite (notamment à matrice organique) sans altération de sa résistance mécanique.

A cette fin, selon l'invention, l'outil pour l'usinage d'une paroi d'une pièce, notamment en matériau composite, destiné à creuser un sillon dans ladite paroi, ledit outil comprenant les caractéristiques techniques de la revendication 1.

Ainsi, grâce à l'outil d'usinage de l'invention, le taraudage d'un trou pratiqué dans l'épaisseur d'une pièce en matériau composite (par exemple à matrice organique) est effectué par abrasion dudit matériau au moyen de la ou des nervures de l'outil en rotation, de sorte qu'aucun délaminage, ni dégradation de la résine formant le matériau CMO n'est observé. La surface externe du sillon creusé par la ou les nervures - définissant un filet hélicoïdal dans le cas d'un taraudage - est uniforme, régulière et propre. Il n'y a pas, ou quasiment pas, d'arrachement de fibres, l'outil d'usinage étant dépourvu de dents de coupe. De plus, l'outil d'usinage de l'invention nécessite une force d'application réduite en comparaison de celle requise lors de la mise en oeuvre des tarauds ou fraises à fileter connus, ce qui allonge sa durée de vie d'utilisation et réduit, par conséquent, les coûts d'usinage. La tenue mécanique de la pièce usinée, soumise à des efforts significatifs, peut être ainsi assurée sans recourir à des éléments externes de renforcement (coupelle, rondelle, etc....) ou à une augmentation de matière. La santé matière de la pièce ainsi usinée est garantie.

La surface externe plate du bandeau annulaire permet ainsi de disposer d'une surface importante, recouverte de grains abrasifs, pour entrer en contact avec le matériau composite. Cette importante surface permet d'enlever de grands volumes de copeaux lors du passage de l'outil et donc de réaliser plus rapidement une ébauche des filets de taraudage par les nervures secondaires. Grâce à l'action de cette surface le nombre de passes nécessaires à la réalisation est alors réduit et, dans la pratique, une seule passe est en général suffisante pour effectuer le taraudage d'un trou dans du matériau composite.

On comprendra que, bien qu'il soit particulièrement adapté au taraudage de trous, l'outil d'usinage de l'invention peut également être mise en oeuvre pour le filetage de la paroi externe d'une pièce ou bien encore, de façon plus générale, pour la réalisation d'un sillon hélicoïdal ou de plusieurs sillons parallèles dans une pièce.

Dans un mode de réalisation conforme à l'invention, l'outil d'usinage comprend une pluralité de nervures annulaires saillantes principales parallèles les unes aux autres, de préférence entre deux et six, qui définissent entre elles des stries.

En particulier, afin de former un sillon de pas donné, les nervures principales sont avantageusement régulièrement réparties les unes par rapport aux autres, de telle sorte que le pas des nervures principales soit égal au pas du sillon.

Ainsi, lorsqu'elle comporte uniquement des nervures principales identiques, la tête d'usinage présente une forme cylindrique. Dans ce cas, le taraudage d'un trou cylindrique peut être obtenu par la mise en oeuvre d'une interpolation hélicoïdale de l'outil d'usinage et peut nécessiter plusieurs passages dudit outil contre la paroi pour creuser le sillon définitif définissant le filet hélicoïdal.

En particulier, l'outil d'usinage de l'invention peut comprendre une pluralité de nervures annulaires saillantes auxiliaires parallèles les unes aux autres, de préférence entre deux et cinq, qui définissent entre elles des stries et dans lequel la hauteur radiale décroit régulièrement depuis la hauteur radiale maximale associée à une nervure principale adjacente à celles-ci, de telle façon que les extrémités radiales des nervures auxiliaires et de la nervure principale adjacente soient alignées selon une droite inclinée par rapport à l'axe L-L et appartenant à un plan axial passant par cet axe L-L. Autrement dit, la profondeur des stries entre les nervures auxiliaires décroît également lorsque l'on s'écarte de la nervure principale adjacente. Cela assure notamment une répartition progressive de l'engagement de matière dans chaque strie formée par les nervures auxiliaires.

Deux configurations sont alors envisageables :
- dans une première configuration, la tête de l'outil ne comporte qu'une seule nervure principale et plusieurs nervures auxiliaires définies de la façon précitée de sorte que la tête d'usinage présente une forme tronconique ; et
- dans une seconde configuration, la tête de l'outil comporte plusieurs nervures principales et plusieurs nervures auxiliaires. La tête de l'outil comprend alors une portion de forme cylindrique, formée par les nervures principales, et une portion de forme tronconique, définie par les nervures auxiliaires.

Le bandeau annulaire est aligné avec ladite droite inclinée par rapport à l'axe L-L, l'écartement entre deux arêtes circulaires d'une même nervure auxiliaire étant ainsi d'autant plus grand que l'on se rapproche de l'extrémité longitudinale de la tête. On facilite ainsi l'ébauchage des filets par la surface plate des nervures secondaires, dont les premières à attaquer le matériau composite présentent une surface plus importante que les suivantes. L'ébauchage effectué par les premières nervures secondaires étant plus efficace en termes de grosseur des copeaux enlevés, que celui pratiqué par les outils de l'art antérieur, on réduit le nombre de passes nécessaires pour obtenir le taraudage recherché.

De plus, afin de former un sillon de pas donné, la ou les nervures principales et les nervures auxiliaires sont avantageusement régulièrement réparties les unes par rapport aux autres, de telle sorte que le pas desdites nervures soit égal au pas du sillon.

Quelle que soit la configuration précitée envisagée, la nature des nervures auxiliaires permet de creuser progressivement l'ébauche d'un sillon dans la paroi, en l'attaquant de préférence par la nervure auxiliaire de hauteur la plus faible, cette ébauche étant ensuite façonnée par la ou les nervures principales pour obtenir le sillon définitif. Dans le cas d'un trou cylindrique formé dans une pièce, l'opération de taraudage peut être obtenue à l'aide d'une unique interpolation hélicoïdale de l'outil d'usinage (c'est-à-dire par un seul passage de celui-ci) réduisant le temps d'usinage et l'usure de l'outil.

En outre, dans cet autre mode de réalisation, on a :
- soit la ou les nervures principales agencées à l'extrémité longitudinale dudit outil. Un tel agencement est, par exemple, adapté au taraudage d'un trou débouchant mettant en oeuvre une interpolation hélicoïdale avec remontée de l'outil d'usinage le long de la paroi du trou ;
- soit la ou les nervures auxiliaires agencées à l'extrémité longitudinale dudit outil, de telle sorte que la nervure auxiliaire de hauteur radiale la plus petite soit disposée à cette extrémité longitudinale. Un tel agencement est notamment adapté au taraudage d'un trou borgne ou d'un trou débouchant mettant en oeuvre une interpolation hélicoïdale avec descente de l'outil d'usinage le long de la paroi du trou.

Par ailleurs, les grains abrasifs associés à une nervure annulaire principale présentent une granulométrie (par exemple comprise entre 46µm et 91µm) qui est inférieure à la granulométrie des grains abrasifs associés à une nervure auxiliaire (par exemple comprise entre 107µm et 427µm).

Ainsi, la ou les nervures auxiliaires permettent de creuser une ébauche du sillon par la suite façonnée par la ou les nervures principales pour obtenir le sillon définitif.

Bien entendu, en variante, les grains abrasifs associés à une nervure annulaire principale pourrait présenter une granulométrie au moins égale à celle des grains abrasifs associés à une nervure auxiliaire.

On comprendra, que la granulométrie des grains abrasifs peut avantageusement être choisie en fonction des dimensions de la nervure considérée, du nombre de nervures et/ou des dimensions du trou à tarauder.

En outre, les grains abrasifs associés à une nervure principale et ceux associés à une nervure auxiliaire peuvent être soit de même nature, soit de nature différente.

De façon avantageuse, les grains abrasifs utilisés dans le cadre de l'invention peuvent être en diamant, naturel ou synthétique, ou bien en nitrure de bore cubique.

Par ailleurs, les grains abrasifs peuvent être déposés sur la surface externe des nervures principales et auxiliaires lors d'une opération de galvanoplastie.

De plus, l'outil d'usinage de l'invention peut comprendre au moins un canal interne d'alimentation en fluide, de lubrification ou de refroidissement, ménagé dans la tête de l'outil et débouchant latéralement par au moins un orifice d'évacuation.

En variante ou en complément, l'outil d'usinage de l'invention peut comprendre au moins une rainure d'alimentation en fluide, de préférence hélicoïdale.

Par ailleurs, la présente invention concerne également un procédé de taraudage d'une pièce en matériau composite comportant au moins un trou cylindrique caractérisé en ce qu'il met en oeuvre un outil d'usinage tel que décrit ci-dessus.

Les figures du dessin annexé feront bien comprendre comment l'invention peut être réalisée. Sur ces figures, des références identiques désignent des éléments semblables.
La figure 1 représente schématiquement, dans une vue de profil, un premier exemple de réalisation d'un outil d'usinage conforme à la présente invention.
La figure 2 est une vue schématique en perspective de l'outil de la figure 1.
La figure 3 illustre un exemple de trajectoire associée à une interpolation hélicoïdale suivie par l'axe longitudinal de l'outil de la figure 1, lors d'une opération de taraudage d'un trou.
La figure 4 montre, dans une vue schématique en perspective, un second exemple de réalisation d'un outil d'usinage conforme à la présente invention.

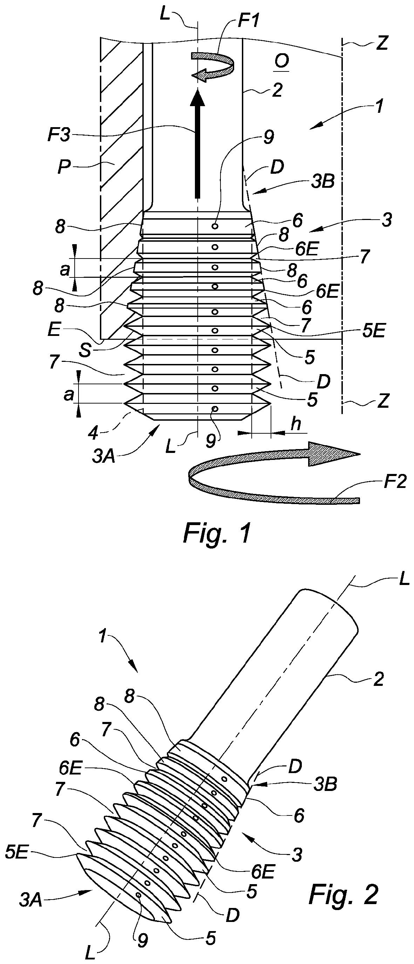

Sur les figures 1 et 2, on a représenté un premier exemple de réalisation d'un outil d'usinage 1, conforme à la présente invention, utilisé pour tarauder un trou cylindrique O (partiellement représenté) - d'axe longitudinal Z-Z percé dans une pièce en matériau CMO - en creusant un sillon hélicoïdal S de pas donné a dans la paroi P du trou O.

Bien qu'il soit particulièrement adapté à l'usinage d'une pièce en matériau composite (et notamment en matériau CMO), on comprendra que l'outil d'usinage 1 peut également servir à usiner des pièces formées à partir de tout autre matériau (métal, plastique, etc.).

Comme le montrent les figures 1 et 2, l'outil d'usinage 1 comporte :
- une tige 2 d'axe longitudinal L-L qui est destinée à être fixée, à une de ses extrémités longitudinales, à une machine outil à commande numérique (non représentée sur les figures) apte à la mettre en rotation autour de son axe L-L (ce mouvement de rotation étant symbolisé par la flèche F1) ; et
- une tête 3 qui est formée d'un corps cylindrique 4 et qui est solidaire de l'extrémité longitudinale libre de la tige 2. On notera que la tige 2 et la tête 3 peuvent être distinctes ou, au contraire, ne former qu'une seule et même pièce.

Selon ce premier exemple, la tête 3 comporte dix nervures annulaires saillantes 5 et 6 - dont la surface externe est recouverte de grains abrasifs déposés par galvanoplastie - qui appartiennent chacune à un plan orthogonal à l'axe L-L. Les nervures 5 et 6 sont parallèles entre elles et indépendantes les unes des autres.

Les nervures saillantes 5 et 6, définissant deux à deux des stries 7, sont régulièrement réparties les unes par rapport aux autres, de telle sorte que le pas a associé soit égal au pas du sillon hélicoïdal S à creuser pour tarauder le trou O.

Parmi les dix nervures saillantes 5 et 6, on distingue :
- cinq nervures principales 5 adjacentes, dont la hauteur radiale h correspond à la profondeur du sillon hélicoïdal S ; et
- cinq nervures auxiliaires 6 adjacentes, dont la hauteur radiale h est inférieure à la hauteur radiale d'une nervure principale 5. Autrement dit, la hauteur radiale d'une nervure auxiliaire 6 est inférieure à la profondeur du sillon hélicoïdal S.

En outre, les nervures principales 5 sont agencées du côté de l'extrémité longitudinale libre 3A de la tête 3, alors que les nervures auxiliaires 6 sont attenantes aux nervures principales 5 et sont disposées du côté de l'extrémité longitudinale 3B de la tête 3, solidaire de la tige 2.

Comme le montrent les figures 1 et 2, la hauteur radiale h des nervures auxiliaires 6 décroit régulièrement depuis la hauteur radiale maximale associée à la nervure principale 5 jouxtant la première nervure auxiliaire 6.

Ainsi, les extrémités radiales 6E et 5E des nervures auxiliaires 6 et de la première nervure principale adjacente 5 sont alignées selon une droite D-D inclinée par rapport à l'axe L-L et appartenant à un plan axial passant par cet axe L-L. Les nervures auxiliaires 6 et la première nervure principale adjacente 5 à celles-ci définissent alors un tronc de cône dont une génératrice est formée par la droite D-D. Autrement dit, par les nervures principales 5 et auxiliaires 6, la tête 3 présente une portion de forme cylindrique (nervures principales 5) et une portion de forme tronconique (nervures auxiliaires 6).

Alors que les nervures principales 5 ne comportent qu'une seule arête saillante circulaire à l'extrémité radiale 5E, séparée d'une hauteur h de la base de la nervure correspondante, les nervures auxiliaires 6 comprennent deux arêtes circulaires (dont une correspond à l'extrémité radiale 6E) appartenant chacune à une génératrice D-D définissant le tronc de cône. L'écartement entre deux arêtes circulaires d'une même nervure auxiliaire 6 est d'autant plus grand que l'on se rapproche de l'extrémité longitudinale 3B de la tête 3.

Pour chaque nervure auxiliaire 6, un bandeau annulaire 8 - dont la surface latérale correspondante est confondue avec la surface du tronc de cône définie par la génératrice D-D - est défini entre les deux arêtes circulaires associées. Ce bandeau annulaire à surface externe plate (c'est-à-dire ayant une forme de révolution avec une génératrice rectiligne) présente ainsi une surface importante, recouverte de grains abrasifs, qui entre en contact avec le matériau composite. Cette importante surface en contact avec la paroi du trou à tarauder, permet, par comparaison avec l'art antérieur, d'enlever de grands volumes de copeaux lors du passage de l'outil et donc de réaliser plus rapidement une ébauche des filets de taraudage par les nervures secondaires. Grâce à l'action de cette surface le nombre de passes nécessaires à la réalisation est alors réduit et, dans la pratique, une seule passe est en général suffisante pour effectuer le taraudage d'un trou dans du matériau composite.

Dans cet exemple, les grains abrasifs recouvrant la surface externe des nervures principales 5 présentent une granulométrie inférieure à celle des grains abrasifs recouvrant la surface externe des nervures auxiliaires 6.

A titre d'exemple numérique non limitatif, la granulométrie des grains abrasifs des nervures principales 5 peut être comprise entre 46µm et 91µm et celle des grains abrasifs des nervures auxiliaires 6 entre 107µm et 427µm.

Ainsi, les nervures auxiliaires 6 à gros grains creusent une ébauche du sillon S dans la paroi P du trou O, dont la formation est ensuite parachevée par les nervures principales 5 à grains fins pour obtenir la forme définitive du sillon S.

On notera que les grains abrasifs des nervures principales 5 et ceux des nervures auxiliaires 6 sont soit de même nature, soit de nature différente.

De façon avantageuse, les grains abrasifs utilisés dans le cadre de l'invention peuvent être en diamant, naturel ou synthétique, ou bien en nitrure de bore cubique. Le liant d'enrobage qui agglomère ces grains est, par exemple, métallique, en résine ou bien encore en nickel électrodéposé.

En outre, l'outil d'usinage 1 peut comprendre un ou plusieurs canaux internes (non représentés) d'alimentation en fluide, de lubrification ou de refroidissement, qui sont ménagés dans la tête 3 et qui débouchent latéralement par des orifices d'évacuation 9.

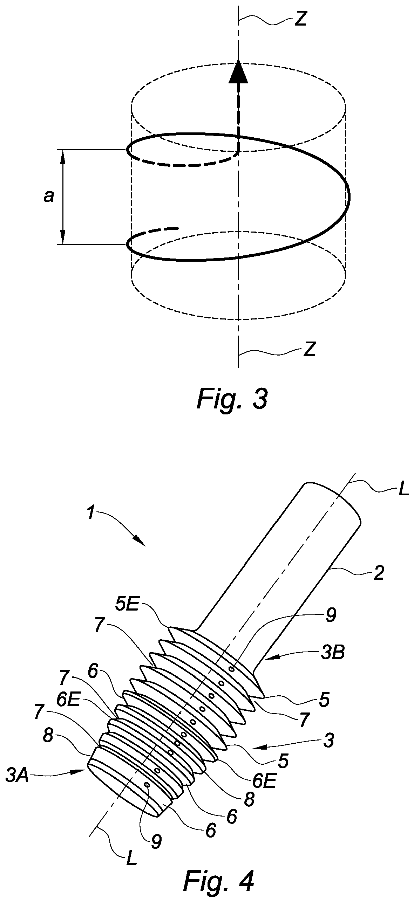

Conformément à l'invention, comme le représentent les figures 1 et 3, l'opération de taraudage par l'outil d'usinage 1 du trou cylindrique O - formé dans la paroi P en matériau CMO - peut être réalisée automatiquement à l'aide de la machine à commande numérique capable de guider l'outil 1 le long d'une trajectoire hélicoïdale T. De cette façon, l'outil d'usinage 1 effectue une interpolation hélicoïdale.

Une telle interpolation hélicoïdale s'obtient en combinant un mouvement circulaire (symbolisé par la flèche F2) dans un plan transversal orthogonal à l'axe Z-Z avec un mouvement simultané en translation (symbolisé par la flèche F3) le long d'un axe parallèle à l'axe Z-Z du trou O.

Pour effectuer le taraudage du trou O, la machine à commande numérique met en rotation l'outil 1 sur lui-même (flèche F1), descend l'outil 1 le long de l'axe Z-Z, décale l'axe L-L de l'outil 1 par rapport à l'axe Z-Z du trou O suivant un mouvement en spirale dans un plan transversal à l'axe L-L, pour amener l'outil 1 contre la paroi interne P du trou O à tarauder, et amorce le déplacement de l'outil 1 le long de la trajectoire hélicoïdale T (flèches F2 et F3).

Lorsque l'axe L-L de l'outil 1 effectue un tour complet (soit 360°), la tête 3 de l'outil 1 réalise un déplacement parallèle à l'axe Z-Z égal à la longueur du pas du sillon S à creuser et donc du pas des nervures.

Dans le second exemple de réalisation de l'outil d'usinage conforme à l'invention, les nervures auxiliaires 6 sont désormais agencées à l'extrémité longitudinale 3A de la tête 3 de l'outil 1, de façon que la nervure auxiliaire 6 de hauteur la plus petite soit disposée à cette extrémité longitudinale 3A.

Ainsi, si l'outil d'usinage 1 du premier exemple des figures 1 et 2 est adapté pour le taraudage du trou O débouchant par une opération d'interpolation hélicoïdale avec remontée de l'outil d'usinage 1 le long de la paroi P du trou O (symbolisée par la flèche F3), l'outil d'usinage 1 du second exemple de la figure 4 convient, quant à lui, au taraudage d'un trou borgne ou d'un trou débouchant O mettant en oeuvre une interpolation hélicoïdale avec descente de l'outil d'usinage 1 le long de la paroi P dudit trou O.

Par ailleurs, bien que, dans les exemples décrits, l'outil d'usinage soit utilisé comme outil de taraudage, on comprendra de ce qui précède qu'il est également adapté pour le filetage d'une paroi externe d'une pièce ou bien encore, de façon plus générale, pour la réalisation d'un sillon hélicoïdal ou de plusieurs sillons parallèles dans une pièce.

## Revendications

1. Outil pour l'usinage d'une paroi (P) d'une pièce, notamment en matériau composite, destiné à creuser un sillon (S) dans ladite paroi (P), ledit outil (1) comprenant une tête (3) montée solidaire d'une tige (2) d'axe longitudinal L-L apte à être entraînée en rotation autour de ce dernier, ladite tête (3) comportant au moins une nervure annulaire saillante principale (5), dont la surface externe est recouverte de grains abrasifs de granulométrie prédéterminée et dont la hauteur radiale (h) correspond à la profondeur dudit sillon (S) à creuser, et au moins une pluralité de nervures annulaires saillantes auxiliaires (6) parallèles les unes aux autres, qui définissent entre elles des stries (7), dont la surface externe est recouverte de grains abrasifs de granulométrie prédéterminée et dont la hauteur radiale est inférieure à la hauteur radiale d'une nervure principale (5),
**caractérisé par le fait que** lesdites nervures auxiliaires comprennent deux arêtes circulaires séparées par un bandeau annulaire (8) de forme plate, l'écartement entre deux arêtes circulaires d'une même nervure auxiliaire (6) étant d'autant plus grand que l'on se rapproche de l'extrémité longitudinale (3B) de la tête (3).

2. Outil d'usinage selon la revendication précédente, comprenant une pluralité de nervures annulaires saillantes principales (5) parallèles les unes aux autres, de préférence entre deux et six, qui définissent entre elles des stries (7).

3. Outil d'usinage selon la revendication précédente pour former un sillon (S) de pas donné (a), dans laquelle les nervures principales (5) sont régulièrement réparties les unes par rapport aux autres, de telle sorte que le pas (a) des nervures principales (5) soit égal au pas du sillon (S).

4. Outil d'usinage selon l'une des revendications précédentes dans lequel la hauteur radiale (h) décroit régulièrement depuis la hauteur radiale maximale associée à une nervure principale (5) adjacente aux nervures auxiliaires (6), de telle façon que les extrémités radiales (5E, 6E) des nervures auxiliaires (6) et de la nervure principale (5) adjacente soient alignées selon une droite (D-D) inclinée par rapport à l'axe L-L et appartenant à un plan axial passant par cet axe L-L.

5. Outil d'usinage selon la revendication précédente dans lequel le bandeau annulaire (8) est aligné avec ladite droite D-D.

6. Outil d'usinage selon l'une des revendications 4 ou 5 pour former un sillon (S) de pas donné (a), dans laquelle la ou les nervures principales (5) et les nervures auxiliaires (6) sont régulièrement réparties les unes par rapport aux autres, de telle sorte que le pas (a) desdites nervures (5, 6) soit égal au pas du sillon (S).

7. Outil d'usinage selon l'une des revendications 4 à 6, dans lequel la ou les nervures principales (5) sont agencées à l'extrémité longitudinale (3A) dudit outil (1).

8. Outil d'usinage selon l'une des revendications 4 à 6, dans lequel la ou les nervures auxiliaires (6) sont agencées à l'extrémité longitudinale (3A) dudit outil (1), de telle sorte que la nervure auxiliaire (6) de hauteur radiale la plus petite soit disposée à cette extrémité longitudinale (3A).

9. Outil d'usinage selon l'une des revendications 4 à 8, dans lequel les grains abrasifs associés à une nervure annulaire principale (5) présentent une granulométrie, par exemple comprise entre 46µm et 91µm, qui est inférieure à la granulométrie des grains abrasifs associés à une nervure auxiliaire (6), par exemple comprise entre 107µm et 427µm.

10. Procédé de taraudage d'une pièce en matériau composite comportant au moins un trou cylindrique (O),
**caractérisée par le fait qu'**il met en oeuvre un outil d'usinage (1) tel que spécifié sous l'une des revendications 1 à 9.

## Patentansprüche

1. Werkzeug zur Bearbeitung einer Wand (P) eines Werkstücks, insbesondere aus Verbundmaterial, das dazu bestimmt ist, eine Nut (S) in die Wand (P) einzuarbeiten, wobei das Werkzeug (1) einen Kopf (3) umfasst, der fest mit einer Stange (2) der Längsachse L-L montiert ist, die imstande ist, um diese drehbar angetrieben zu werden, wobei der Kopf (3) mindestens eine vorstehende ringförmige Hauptrippe (5) beinhaltet, deren Außenoberfläche mit Schleifkörnern einer vorbestimmten Korngröße bedeckt ist und deren radiale Höhe (h) der Tiefe der einzuarbeitenden Nut (S) entspricht, und mindestens eine Vielzahl von vorstehenden ringförmigen Hilfsrippen (6) parallel zueinander, die zwischen sich Rillen (7) definieren, deren Außenoberfläche mit Schleifkörnern einer vorbestimmten Korngröße bedeckt ist und deren radiale Höhe kleiner als die radiale Höhe einer Hauptrippe (5) ist,
**dadurch gekennzeichnet, dass** die Hilfsrippen zwei kreisförmige Kanten umfassen, die durch ein Ringband (8) in flacher Form getrennt sind, wobei der Abstand zwischen zwei kreisförmigen Kanten einer selben Hilfsrippe (6) umso größer ist, je mehr man sich dem Längsende (3B) des Kopfes (3) nähert.

2. Bearbeitungswerkzeug nach dem vorstehenden Anspruch, umfassend eine Vielzahl von parallel zueinander, vorzugsweise zwischen zwei und sechs, vorstehenden ringförmigen Hauptrippen (5), die zwischen sich Rillen (7) definieren.

3. Bearbeitungswerkzeug nach dem vorstehenden Anspruch zum Bilden einer Nut (S) mit einer bestimmten Steigung (a), bei dem die Hauptrippen (5) gleichmäßig zueinander verteilt sind, so dass die Steigung (a) der Hauptrippen (5) gleich der Steigung der Nut (S) ist.

4. Bearbeitungswerkzeug nach einem der vorstehenden Ansprüche, wobei die radiale Höhe (h) regelmäßig von der maximalen radialen Höhe abnimmt, die mit einer Hauptrippe (5) assoziiert ist, die an die Hilfsrippen (6) angrenzt, so dass die radialen Enden (5E, 6E) der Hilfsrippen (6) und der angrenzenden Hauptrippe (5) entlang einer in Bezug auf die L-L-Achse geneigten Geraden (D-D) ausgerichtet sind und zu einer axialen Ebene gehören, die durch diese L-L-Achse führt.

5. Bearbeitungswerkzeug nach dem vorstehenden Anspruch, wobei das Ringband (8) mit der D-D-Geraden ausgerichtet ist.

6. Bearbeitungswerkzeug nach einem der Ansprüche 4 oder 5 zum Bilden einer Nut (S) mit einer bestimmten Steigung (a), wobei die Hauptrippe(n) (5) und die Hilfsrippen (6) gleichmäßig zueinander verteilt ist bzw. sind, so dass die Steigung (a) der Rippen (5, 6) gleich der Steigung der Nut (S) ist.

7. Bearbeitungswerkzeug nach einem der Ansprüche 4 bis 6, wobei die Hauptrippe(n) (5) am Längsende (3A) des Werkzeugs (1) angeordnet ist bzw. sind.

8. Bearbeitungswerkzeug nach einem der Ansprüche 4 bis 6, wobei die Hilfsrippe(n) (6) am Längsende (3A) des Werkzeugs (1) angeordnet ist bzw. sind, so dass die Hilfsrippe (6) mit der kleinsten radialen Höhe an diesem Längsende (3A) angeordnet ist.

9. Bearbeitungswerkzeug nach einem der Ansprüche 4 bis 8, wobei die mit einer ringförmigen Hauptrippe (5) assoziierten Schleifkörner eine Korngröße, beispielsweise im Bereich zwischen 46µm und 91µm, aufweisen, die kleiner ist als die Korngröße der mit einer Hilfsrippe (6) assoziierten Schleifkörner, beispielsweise im Bereich zwischen 107µm und 427µm.

10. Verfahren zum Gewindebohren eines Werkstücks aus Verbundmaterial, das mindestens eine zylindrische Bohrung (O) beinhaltet,
**dadurch gekennzeichnet, dass** es ein Bearbeitungswerkzeug (1) nach einem der Ansprüche 1 bis 9 verwendet.

## Claims

1. A tool for machining a wall (P) of a workpiece, in particular made from a composite material, designed to cut a furrow (S) in said wall (P), said tool (1) comprising a head (3) securely mounted on a stem (2) of longitudinal axis L-L which can be driven in rotation about the latter, said head (3) comprising at least one main projecting annular rib (5) whose outer surface is covered with abrasive grains of predetermined grain size and whose radial height (h) corresponds to the depth of said furrow (S) to be cut, and at least a plurality of mutually parallel auxiliary projecting annular ribs (6) which define grooves (7)_whose outer surface is covered with abrasive grains of predetermined grain size and whose radial height is less than the radial height of a main rib (5),
**characterized in that** said auxiliary ribs comprise two circular edges separated by an annular band (8) which is flat, the separation between two circular edges of a single auxiliary rib (6) thus increasing as one approaches the longitudinal end (3B) of the head (3).

2. The machining tool as claimed in the preceding claim, comprising a plurality of mutually parallel main projecting annular ribs (5), preferably between two and six, which define grooves (7) between them.

3. The machining tool as claimed in the preceding claim, for cutting a furrow (S) of a given pitch (a), in which the main ribs (5) are regularly spaced from one another, such that the pitch (a) of the main ribs (5) is equal to the pitch of the furrow (S).

4. The machining tool as claimed in one of the preceding claims, in which the radial height (h) decreases regularly from the maximum radial height associated with a main rib (5) which is adjacent to , such that the radial ends (5E, 6E) of the auxiliary ribs (6) and of the adjacent main rib (5) are aligned along a straight line (D-D) which is inclined with respect to the axis L-L and belongs to an axial plane passing through this axis L-L.

5. The machining tool as claimed in the preceding claim, in which the annular band (8) is aligned with said straight line D-D.

6. The machining tool as claimed in either of claims 4 and 5, for cutting a furrow (S) of a given pitch (a), in which the main rib or ribs (5) and the auxiliary ribs (6) are regularly spaced from one another, such that the pitch (a) of said ribs (5, 6) is equal to the pitch of the furrow (S).

7. The machining tool as claimed in one of claims 4 to 6, in which the main rib or ribs (5) are arranged at the longitudinal end (3A) of said tool (1).

8. The machining tool as claimed in one of claims 4 to 6, in which the auxiliary rib or ribs (6) are arranged at the longitudinal end (3A) of said tool (1), such that the auxiliary rib (6) having the smallest radial height is positioned at this longitudinal end (3A) .

9. The machining tool as claimed in one of claims 4 to 8, in which the abrasive grains associated with a main annular rib (5) have a grain size, for example between 46 µm and 91 µm, which is smaller than the grain size of the abrasive grains associated with an auxiliary rib (6), for example between 107 µm and 427 µm.

10. A method for tapping a workpiece made from a composite material comprising at least one cylindrical hole (O),
**characterized in that** it employs a machining tool (1) as specified in one of claims 1 to 9.
